# EUROPEAN PATENT APPLICATION

(11) **EP 1 424 840 A1**
(43) Date of publication of application: **02.06.2004**
(21) Application number: 03104370.6
(22) Date of filing: 25.11.2003
(51) Int. Cl.: H04M 1/725, H04M 1/60

(54) **System and method of automatically answering calls in a wireless communication device**

(30) Priority: 27.11.2002 US 429617 P; 14.11.2003 US 341685
(71) Applicant: Motorola Inc., Schaumburg, IL 60196 (US)
(72) Inventor: Lundsgaard, Soren K, 60010 Inverness (US)
(74) Representative: Gibson, Sarah Jane

(57) **Abstract**

Automatically answering incoming calls in a portable wireless communication device (22) that includes a transceiver (32) that receives incoming calls, a positioning unit (34) that determines a geographic position of the device (22), and a controller (30) to determine a speed of the portable wireless communication device (22) and to automatically answer the incoming call when the speed of the portable wireless communication device (22) is above a predetermined threshold. The controller (30) can also operate the portable wireless communication device (22) in a speakerphone mode or private mode, or to forward the call, depending on the speed of the device (22).

## Description

### REFERENCE TO RELATED APPLICATION

The present application claims priority from provisional application, Serial No. 60/429,617, entitled "SYSTEM AND METHOD OF AUTOMATICALLY ANSWERING CALLS IN A WIRELESS COMMUNICATION DEVICE," filed November 27, 2002, which is commonly owned and incorporated herein by reference in its entirety.

### FIELD OF THE INVENTION

This invention in general relates to hands-free communication systems for portable wireless communication devices and, more particularly, to a system and method of automatically answering calls in a wireless communication device while the device is in motion.

### BACKGROUND OF THE INVENTION

Today, many people use portable wireless communication devices in their vehicles. The industry is focused on providing hands-free features to people who use portable devices in their vehicle. Some portable devices have a speakerphone feature that allows a user to communicate without requiring that the device be located next to the user's ear and mouth. Other portable devices have vehicle connections that allow the audio output of the device to be routed to a radio system in the vehicle.

There is a continuing need, however, for more efficient use of a portable wireless communication device in a vehicle and, more particularly, in answering incoming voice calls. For instance, in conventional hands-free systems, a user may still be required to push a button or perform some physical act before establishing a wireless communication link for an incoming voice call. If the user is operating a vehicle during that time, the user may not be able to push a button or perform some physical act to initiate a voice call. Accordingly, an incoming phone call may go unanswered.

It is, therefore, desirable to provide an improved hands-free cellular communication system and method for answering a portable wireless communication device to overcome or minimize most, if not all, of the preceding problems.

### BRIEF DESCRIPTION OF THE DRAWINGS

FIG. 1 is a perspective view of a portable wireless communication device in a vehicle according to one embodiment of the present invention;
FIG. 2 is a block diagram of a portable wireless communication device according to one embodiment of the present invention;
FIG. 3 is a flow diagram of one method to automatically answer incoming calls directed to a portable wireless communication device.
FIG. 4 is a perspective view of a portable wireless communication device and a Telematics unit in a vehicle according to another embodiment of the present invention;
FIG. 5 is a block diagram of a portable wireless communication device and a Telematics unit in a vehicle according to another embodiment of the present invention; and
FIG. 6 is a flow diagram of another method to automatically answer incoming calls directed to a portable wireless communication device.

While the invention is susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the appended claims.

### DETAILED DESCRIPTION

What is described is a system and method of automatically answering calls directed to a portable wireless communication device. The system and method reduces the complexity and the number of distractions in answering and using existing hands-free systems. To this end, in one embodiment, there is a portable wireless communication device comprising a transceiver, a positioning unit, and a controller. The transceiver is capable of receiving an incoming call. The positioning unit is used to determine a geographic position of the portable wireless communication device. The controller receives the geographic position and/or a speed of the portable wireless communication device from the positioning unit and is capable of operating the portable wireless communication device in a private mode and a speakerphone mode. The controller is further programmed to automatically answer the incoming call when it is determined that a speed of the portable wireless communication device is faster than a predetermined threshold. The speed may be determined from at least two sequential geographic positions received from the positioning unit over a predetermined time period. Alternatively, the speed may be determined by the positioning unit and provided to the controller.

In one embodiment, the controller may be further programmed to operate the portable wireless communication device in the speakerphone mode when it is determined that the speed of the portable wireless communication device is faster than the predetermined threshold. In another embodiment, the controller may be further programmed to determine whether a user has previously selected an automatically call forward feature in the portable wireless communication device. If so, the controller forwards the incoming call to a vehicle transceiver within the vehicle when it is determined that the user has previously selected the automatic call forward feature and the speed of the portable wireless communication device is faster than the predetermined threshold.

The portable wireless communication device may further comprise a user interface. The user interface may be used in a variety of ways but, in one embodiment of the present invention, the user of the device may use the interface to configure the predetermined threshold related to the acceptable speed for automatically answering an incoming call. The controller may further be programmed to determine a level of uncertainty with relation to the two geographic positions received from the positioning unit. The level of uncertainty may be used by the controller in a determination of whether to automatically answer the incoming call.

In another embodiment, there is a system for automatically answering incoming calls in a portable wireless communication device. The system comprises a cellular transceiver, a positioning unit, and a controller. The cellular transceiver is capable of receiving an incoming call. The positioning unit is used to determine a first geographic position of the portable wireless communication device at a first time and a second geographic position of the portable wireless communication device at a second time. The first time and the second time being separated by a predetermined time period. The controller is programmed to determine a speed of the portable wireless communication device from the first geographic position, the second geographic position, and the predetermined time period. The controller is further programmed to automatically answer the incoming call when it is determined that the speed of the portable wireless communication device is above a predetermined threshold.

There is also a method in a portable wireless communication device that includes the steps of: determining whether an incoming call is being directed to the portable wireless communication device; determining a first geographic position of the portable wireless communication device at a first time; determining a second geographic position of the portable wireless communication device at a second time, the first time and the second time being separated by a predetermined time period; determining a speed of the portable wireless communication device from the first geographic position, the second geographic position, and the predetermined time period; determining whether the speed of the portable wireless communication device is above a predetermined threshold; and automatically answering the incoming call when it is determined that the speed of the portable wireless communication device is above the predetermined threshold. The step of automatically answering the incoming call may further include the step of operating the portable wireless communication device in a speakerphone mode when it is determined that the speed of the portable wireless communication device is above the predetermined threshold. Alternatively, the step of automatically answering the incoming call may further include the step of forwarding the incoming call to a vehicle transceiver within a vehicle when it is determined that the speed of the portable wireless communication device is above the predetermined threshold.

The method may further include a step of determining whether a user has previously selected an automatic call answer feature in the portable wireless communication device prior to automatically answering the incoming call. The method may also include a step of determining a level of uncertainty with relation to the first and second geographic positions prior to automatically answering the incoming call.

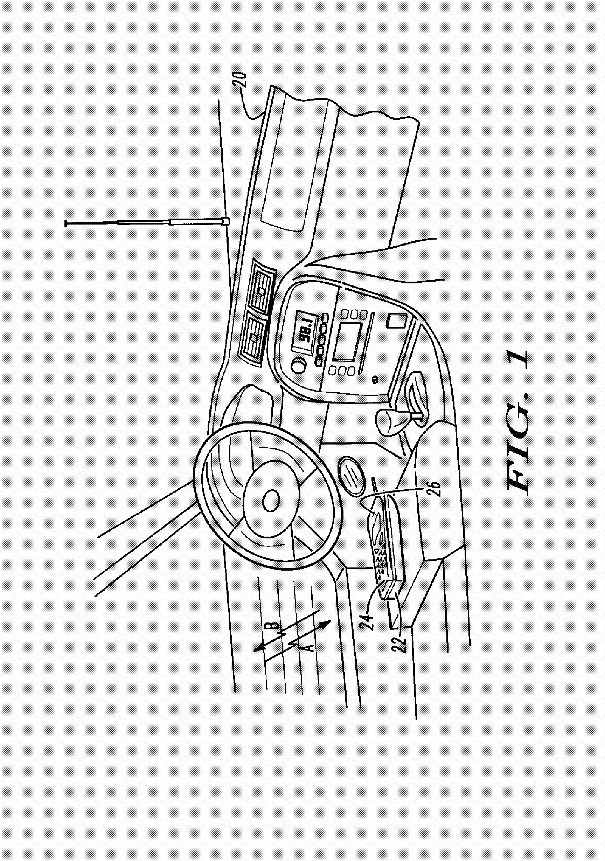

Now, turning to the drawings, FIG. 1 is a perspective view of the cabin of a vehicle 20. Within the cabin of the vehicle 20 is a portable wireless communication device 22. The portable wireless communication device 22 shown in these figures include a handheld wireless phone that includes a transceiver that allows a user to establish a wireless voice communication through the internal microphone 24 and at least one device internal speaker 26. For the purposes of illustration and description, an example of a portable wireless communication device in the form of a cellular phone will be used. However, the present invention is not limited to cellular phones and the portable wireless communication device 22 could be in other forms such as a personal digital assistant (PDA), a two-way radio, a portable computer, and other wireless devices.

As will be explained in more detail below, in one embodiment, the portable wireless communication device 22 includes a single internal speaker 26 that is configured to operate in two modes: private mode and speakerphone mode. The private mode plays the speaker at a volume suitable for a user to hold the portable wireless communication device 22 to the user's ear while engaging in a call. The speakerphone mode plays the speaker at a louder volume to allow the user to hear information while the portable wireless communication device is away from the user's ear. Alternatively, the portable wireless communication device 22 could have two separate speakers, each operating at a different volume. One of the two speakers could be used for private mode and the other speaker could be used for the speakerphone mode.

A remote third party (not shown) who desires to establish a wireless communication link with the wireless communication device 22 dials a specific number associated with the wireless communication device 22. A wireless network (not shown) associated with the portable wireless communication device 22 routes the incoming call from the remote third party to the device. When a wireless communication link is eventually established, the portable wireless communication device 22 may then receive downlink and transmit uplink wireless communications A and B.

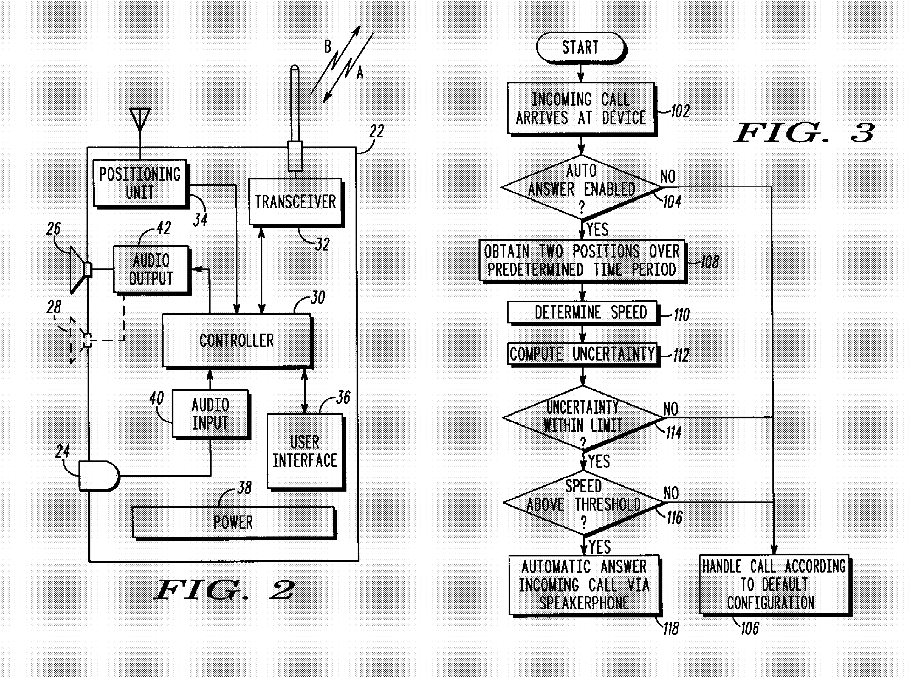

Referring to FIG. 2, in one embodiment of the present invention, the portable wireless communication device 22 may include a microphone 24, at least one speaker 26, 28, a controller 30, a transceiver 32, a positioning unit 34, a user interface 36, and a power supply 38. The portable wireless communication device 22 may further include other circuitry for interconnecting various components within the device such as circuitry for the audio input 40 and the audio output 42.

The operation of the microphone 24 and speakers 26, 28 have been described above. The audio input 40 and audio output 42 contain circuitry to enable the microphone 24 and speakers 26, 28 to operate in either the private mode or the speakerphone mode. As mentioned above, the portable wireless communication device 22 may have one speaker 26 that can operate at two different volumes. Alternatively, the portable wireless communication device 22 may include at least two speakers 26, 28 that each operate at different volumes.

The transceiver 32 is capable of establishing and accepting voice calls over a wireless communication link A and B with a remote station. For instance, the transceiver 32 may be a cellular transceiver and operate according to an analog wireless communication protocol such as the Advanced Mobile Phone System (AMPS) or operate according to a digital wireless communication protocol such as a Code Division Multiple Access (CDMA) protocol or a Time Division Multiple Access (TDMA) protocol.

The positioning unit 34 is a unit that is capable of determining the geographic position (longitude and latitude) of the wireless communication device 22. The positioning unit 34 could be a location unit in accordance with the recent governmental location tracking, or E911, mandates. In another embodiment, the positioning unit 34 may include a global positioning system (GPS) receiver. In that case, a plurality of satellites that orbit the earth transmit radio signals to the GPS receiver. The radio signals are pseudo-random signals that contain information modulated by a pseudo-random code. The GPS receiver in the positioning unit 34 is able to receive and process the satellite radio signals to calculate position and time. Conventional GPS receivers need to track at least four satellites of the GPS constellation in order to compute a GPS receiver's position and time. An almanac is stored in the positioning unit 34 to help identify visible satellites and to track satellite orbits. Locally generated pseudorandom noise codes are generated within the positioning unit 34 and compared to the received satellite signals. From the compared signals, the positioning unit 34 generates measurement data that reflects travel times of the received satellite signals. Knowing the travel times of the satellite signals allows the positioning unit 34 to compute distances between each satellite and the positioning unit 34. The positioning unit 34 may then compute a position solution that can be reported to the controller 30. The receiver may further be configured to determine a velocity or speed of the device that can be reported to the controller 30.

The controller 30 is the heart of the wireless communication device 22. A suitable controller 30 for the present invention may include a digital signal processor (DSP) controller with memory. As described in more detail below, the controller 30 of the present invention preferably executes a number of functional steps. These functional steps may be microcoded signal processing steps that are programmed as operating instructions in the controller 30. The operating instructions may be stored in a computer-readable medium in the controller 30.

For instance, the controller 30 may contain instructions for determining whether to automatically answer an incoming call. In one embodiment, the controller 30 receives position data from the positioning unit 34 at two different times over a predetermined time period. The position data received from the positioning unit 34 relates to a geographic location of the wireless communication device 22. Depending on the movement of the wireless communication device 22 over the predetermined time period, the controller 30 can determine whether an incoming voice call should be automatically answered through the transceiver 32. Alternatively, the positioning unit 34 may provide a velocity or speed to the controller 30. The determination of whether to automatically answer an incoming call may be done for each incoming voice call if the user has selected an automatic call answer feature through the user interface 36.

Accordingly, the controller 30 may contain a program or other microcoded instructions to cooperate with the user interface 36 to accept user preferences related to whether an incoming voice call should be automatically answered by the device and, if so, the criteria for automatically answering an incoming voice call. The memory in the controller 30 of the portable wireless communication device 22 may be used to store user preferences and user selected features and variables.

FIG. 3 shows a flow diagram illustrating one embodiment of a method that may be performed by the wireless communication device 22 in determining whether to answer an incoming voice call. In one embodiment, the method includes a process block 102 that determines that an incoming voice call has arrived and directed to the wireless communication device 22. The process then proceeds to decision block 104.

At decision block 104, a determination is made whether the user has enabled an automatic call answer feature in the wireless communication device 22. The information on whether the user has enabled such a feature could be stored in memory of the controller 30 after the feature is enabled or disabled by the user through the user interface 36. If it is determined that the user had not enabled the automatic call answer feature, then the process may proceed to process block 106 where the wireless communication device 22 may handle the incoming voice call according to a default configuration. For instance, the default configuration may be an alarm or other notification to the user of an incoming call and waiting for the user to press a button to accept the incoming call. If it is determined, however, that the user has enabled the automatic call answer feature, then the process may continue to process block 108.

At process block 108, in one embodiment, the controller 30 obtains two sequential position solutions from the positioning unit 34 over a predetermined time period. The predetermined time period may be set so that the two sequential position solutions are obtained between one or two seconds.

At process block 110, the controller 30 uses the obtained sequential position solutions and the predetermined time period to determine the speed of the wireless communication device 22. This may be accomplished by determining the distance between the two sequential position solutions and then dividing the distance by the predetermined time period. The process may then proceed to process block 112.

At process block 112, depending on the implementation, the controller 30 may compute or otherwise determine the uncertainty of the two sequential position solutions or the uncertainty of the speed determined from the position solutions. There will be some level of uncertainty in the position data derived from the positioning unit 34. The level of uncertainty may depend on several factors including the type of technology, hardware, and algorithms being used. The type of uncertainty used is implementation specific but well known to those of ordinary skill in the art.

Depending on the specific implementation and accuracy needed, in one embodiment, the wireless communication device 22 could be configured to accept a predetermined limit or threshold of uncertainty that would be acceptable to a user of the device. If a limit or threshold is used, the method could further include a decision block 114. At decision block 114, the controller 30 could determine whether the computed level of uncertainty in the two obtained position solutions or determined speed is within an acceptable limit or above a certain predetermined threshold. If it is determined that the obtained positions or speed are not within an acceptable limit or not above a certain threshold, then the process may proceed to process block 106 where the wireless communication device 22 may handle the incoming voice call according to the default configuration. If it is determined, however, that the obtained positions or speed are within an acceptable limit or above a threshold, then the process may continue to process block 116.

In an alternative embodiment, the positioning unit 34 may provide a velocity or speed to the controller 30. The determination of velocity or speed would then be done by the positioning unit 34 and any determination of uncertainty could be performed within that unit.

At decision block 116, the controller 30 determines whether the determined speed of the wireless communication device 22 is above a predetermined threshold. The wireless communication device 22 may be configured to receive the predetermined threshold from the user over the user interface 36 and store the predetermined threshold in memory of the controller 30. For instance, a user of the wireless communication device 22 may wish to configure the predetermined threshold to a speed of 10 miles/hour (14.67 feet/sec) so that the wireless communication device 22 will automatically answer calls when the device is traveling above that speed. If it is determined that the speed of the wireless communication device 22 is not above the threshold, then the process may proceed to process block 106 where the wireless communication device 22 may handle the incoming voice call according to the default configuration. If it is determined, however, that the speed of the wireless communication device 22 is above a threshold, then the process may continue to process block 118.

At process block 118, the wireless communication device 22 will automatically answer the incoming voice call via the speakerphone mode. In one embodiment, the controller 30 configures the audio input 40 and audio output 42 circuitry to act in a mode that enables the user to communicate during the voice call so that the wireless communication device 22 does not have to be next to the user's head (i.e. hands-free). This may include adjusting the volume and reception of the speaker 26 and microphone 24. Alternatively, this may also include switching to a different set of hardware that plays at a different volume such as switching the audio output to play on a louder speaker 28.

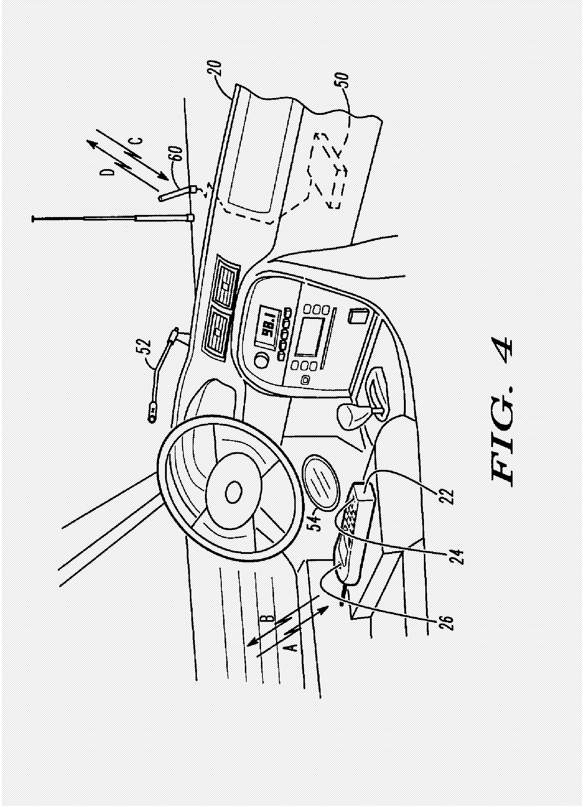

Referring to FIG. 4, in a further embodiment of the present invention, the controller 30 of the wireless communication device 22 may have a mechanism for detecting whether the user would like an incoming voice call to be automatically forwarded to a separate embedded transceiver located in a Telematics unit 50 in the vehicle 20. For instance, several types of Telematics systems for vehicles include an embedded transceiver to transmit and receive audio and data through an external antenna 60 over a wireless communication link C and D. These systems provide hands-free personal communications through an embedded microphone 52 and speaker 54 in the vehicle 20. The OnStar® system by General Motors is an example of such a hands-free system. An outside party may establish a wireless communication link C and D with the vehicle 20 by dialing a phone number associated with the vehicle's embedded transceiver.

In one embodiment of the present invention, when the wireless communication device 22 determines that the device is moving above a certain speed and a call forwarding feature is enabled in the device, then the wireless communication device 22 may forward an incoming call to a phone number corresponding to the embedded transceiver located in the Telematics unit 50 of the vehicle 20.

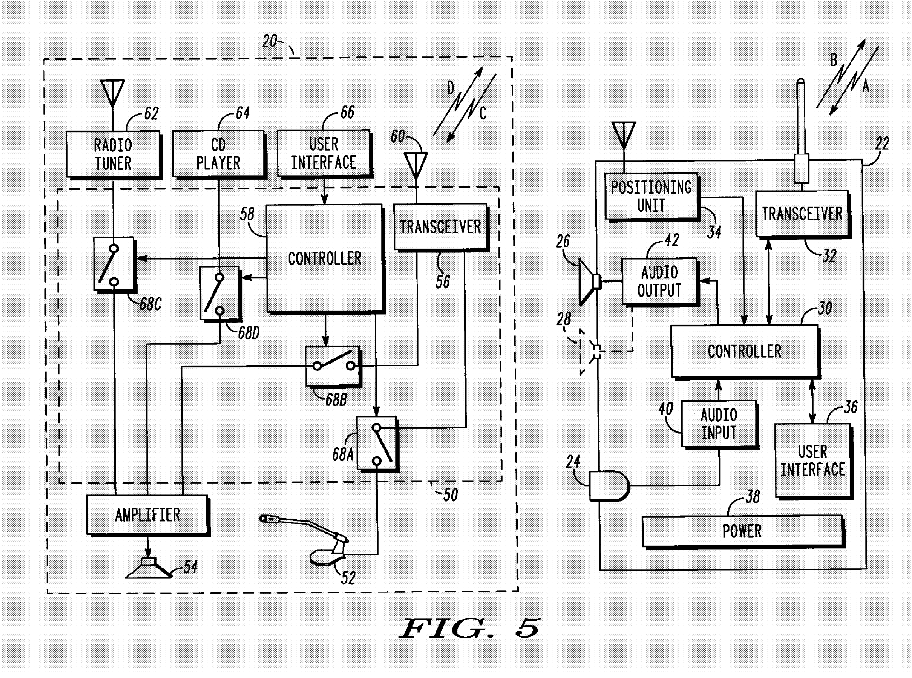

The interaction between the portable wireless communication device 22 and the vehicle 20 will now be explained in the context of FIG. 5. FIG. 5 illustrates a portable wireless communication device 22 in the form of a cellular phone capable of receiving downlink and transmitting uplink cellular voice communications A and B. Similar to the embodiment shown in FIG. 2, the portable wireless communication device 22 in FIG. 5 includes a microphone 24, at least one speaker 26, 28, a controller 30, a transceiver 32, a positioning unit 34, a user interface 36, a power supply 38, an audio input 40, and an audio output 42. The operation of these components is similar to the ones described in relation to FIG. 2 except that the controller 30 may have a further function of forwarding an incoming call to an embedded transceiver 56 in the vehicle 20.

Generally, in one embodiment, the Telematics unit 50 may include the embedded transceiver 56, a controller 58, and a plurality of switches 68A, 68B, 68C, 68D or other circuitry logic. The controller 58 may be connected to a switch 68A to provide the ability to switch, transfer, or otherwise route the audio for uplink wireless communications D from the vehicle microphone 52 to the vehicle's embedded transceiver 56. The controller 58 may be further connected to a switch 68B to provide the ability to switch, transfer, or otherwise route the audio of downlink wireless communications C from the vehicle's embedded transceiver 56 to the vehicle speakers 54.

The Telematics unit 50 may further be connected to peripheral input devices of the radio system of the vehicle 20 such as a radio tuner 62 and a CD player 64 through switches 68C, 68D. This allows the Telematics unit 50 to mute the input devices during a phone conversation over the radio system. The Telematics unit 50 may also be connected to a user interface 66 to receive information such as whether to initiate an emergency call (E-Call) or an information call (I-Call). The Telematics unit 50 may further include other components such as a positioning unit (not shown) to provide positioning information for other Telematics applications for the vehicle 20.

Once it is determined that that the portable wireless communication device 22 is moving above a predetermined speed, the controller 30 in the wireless communication device 22 may be programmed to forward an incoming call to the vehicle's embedded transceiver 56. This may be accomplished, in one embodiment, by sending a message to the wireless network associated with the wireless communication device 22. The message would include an instruction to forward incoming calls as well as the phone number associated with the vehicle transceiver 56. The phone number associated with the vehicle transceiver 56 could be stored in memory of the controller 30 after being entered by the user through the user interface 36.

The controller 30 in the wireless communication device 22 is configured according to known methods to monitor the transceiver 32 for pending incoming cellular voice communications. Upon receiving a pending voice communication, the controller 30 would make a determination whether the device is moving faster than a predetermined speed. In one embodiment, the controller 30 makes this determination from sequential position solutions obtained from the positioning unit 34 over a predetermined time period. If the wireless communication device 22 is moving faster than a predetermined speed, then the device would forward the incoming voice call to the vehicle's embedded transceiver 56. If the wireless communication device is not moving faster than a predetermined speed, then the controller 30 can answer the incoming call according to a default setting that does not automatically answer the incoming call.

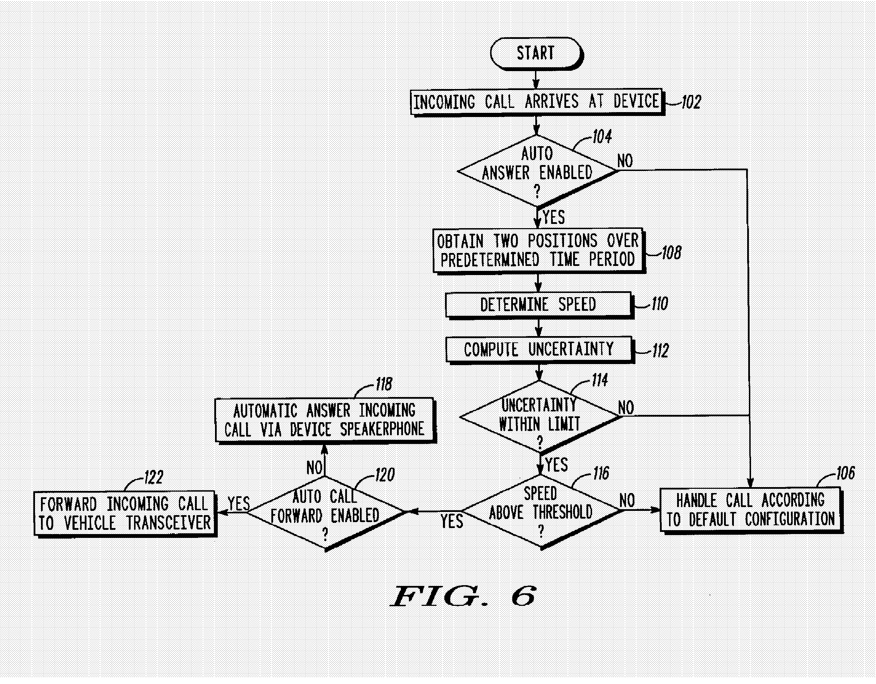

As mentioned above, in one embodiment, the portable wireless communication device 22 includes a controller 30 having a processor that implements software or other microcoded instructions stored in memory. FIG. 6 illustrates another embodiment of a method according to the present invention. In this embodiment, the method uses the same process and decision blocks 102-118 but adds decision block 120 and process block 122. In particular, as described above, a determination is made at decision block 116 on whether the speed of the wireless communication device 22 is above a predetermined threshold. If it is determined that the speed of the wireless communication device 22 is not above the threshold, then the process may proceed to process block 106 where the wireless communication device 22 may handle the incoming voice call according to the default configuration. If it is determined, however, that the speed of the wireless communication device 22 is above a threshold, then the process may continue to decision block 120.

At decision block 120, a determination is made whether the user has enabled an automatic call forward feature in the wireless communication device 22. The information on whether the user has enabled such a feature could be stored in memory of the controller 30 after the feature is enabled or disabled by the user through the user interface 36. This determination step is attractive to those users who may not wish to have all incoming calls forwarded to their in-vehicle Telematics system. If it is determined that the user had not enabled the automatic call forward feature, then the process may proceed to process block 118 where the wireless communication device 22 automatically answer the incoming voice call through the device's speaker phone mode through speakers 26, 28 and microphone 24. If it is determined, however, that the user has enabled the automatic call forward feature, then the process may continue to process block 122.

At process block 122, the process includes a step of forwarding the incoming call to the vehicle transceiver 56. In one embodiment, this can be done by sending a message to a network associated with the portable wireless communication device 22. The message would include an instruction to forward the incoming call and data regarding the phone number that the call should be forwarded. Again the data regarding the phone number of the vehicle transceiver 56 may be stored in memory of the controller 30 after being inputted by the user through the user interface 36.

What has been described is a system and method for automatically answering incoming calls to a portable wireless communication device when the device is moving faster than a predetermined threshold speed. The system and method further includes a mechanism for forwarding calls to a vehicle's embedded transceiver when the device is moving faster than a predetermined threshold speed. The system and method reduces the complexity and the number of distractions when answering or establishing a cellular communication. The system and method also increases the usefulness of the device while enabling calls to be received while in motion without operator action. The above description of the present invention is intended to be exemplary only and is not intended to limit the scope of any patent issuing from this application. The present invention is intended to be limited only by the broad scope of the following claims.

## Claims

1. A portable wireless communication device (22) with a transceiver (32) capable of receiving an incoming call and a positioning unit (34) for determining a geographic position of the portable wireless communication device, the device (22) **characterized by**:
a controller (30) for receiving the geographic position of the portable wireless communication device (22) from the positioning unit (34) and for operating the portable wireless communication device in a private mode and a speakerphone mode;
wherein the controller (30) is programmed to automatically answer the incoming call when it is determined that a speed of the portable wireless communication device (22) is faster than a predetermined threshold, the speed determined from at least two sequential geographic positions received from the positioning unit (34) over a predetermined time period.

2. The portable wireless communication device (22) in claim 1, wherein the controller (30) is further programmed to operate the portable wireless communication device (22) in the speakerphone mode when it is determined that the speed of the portable wireless communication device (22) is faster than the predetermined threshold.

3. The portable wireless communication device (22) in claim 1, wherein the controller (30) is further programmed to forward the incoming call to a vehicle transceiver (56) when it is determined that the user has previously selected to automatically forward the call and the speed of the portable wireless communication device (22) is faster than a predetermined threshold.

4. The portable wireless communication device (22) in claim 3, wherein the programming of the controller (30) to forward the incoming call includes sending a message to a network associated with the portable wireless communication device (22), the message including a telephone number of the vehicle transceiver (56).

5. A system for automatically answering incoming calls using the portable wireless communication device (22) of claim 1.

6. A method for automatically answering incoming calls in a portable wireless communication device, the method **characterized by** the steps of:
determining (102) whether an incoming call is being directed to the portable wireless communication device;
determining (108) a first geographic position of the portable wireless communication device at a first time;
determining (108) a second geographic position of the portable wireless communication device at a second time, the first time and the second time being separated by a predetermined time period;
determining (110) a speed of the portable wireless communication device from the first geographic position, the second geographic position, and the predetermined time period;
determining (116) whether the speed of the portable wireless communication device is above a predetermined threshold; and
automatically answering (118) the incoming call when it is determined that the speed of the portable wireless communication device is above the predetermined threshold.

7. The method in claim 6 wherein the step of automatically answering (118) the incoming call further includes a step of operating the portable wireless communication device in a speakerphone mode when it is determined that the speed of the portable wireless communication device is above the predetermined threshold.

8. The method in claim 6 further **characterized by** a step of forwarding (122) the incoming call to a vehicle transceiver within a vehicle when it is determined that the speed of the portable wireless communication device is above the predetermined threshold.

9. The method in claim 6 further **characterized by** a step of determining (120) whether a user has previously selected an automatic call answer feature in the portable wireless communication device prior to automatically answering the incoming call.

10. The method in claim 6 further **characterized by** a step of determining (114) a level of uncertainty with relation to the first and second geographic positions prior to automatically answering the incoming call.
